(19) Europäisches Patentamt
European Patent Office
Office européen des brevets

(11) **EP 1 196 828 B1**

(12) **EUROPÄISCHE PATENTSCHRIFT**

(45) Veröffentlichungstag und Bekanntmachung des Hinweises auf die Patenterteilung:
**17.09.2003 Patentblatt 2003/38**

(21) Anmeldenummer: **00952939.7**

(22) Anmeldetag: **13.07.2000**

(51) Int Cl.⁷: **G05B 17/02**

(86) Internationale Anmeldenummer:
**PCT/DE00/02299**

(87) Internationale Veröffentlichungsnummer:
**WO 01/006331 (25.01.2001 Gazette 2001/04)**

(54) **VERFAHREN UND ANORDNUNG ZUR VORVERARBEITUNG**

METHOD AND SYSTEM FOR PRE-PROCESSING

PROCEDE ET DISPOSITIF POUR PRETRAITEMENT

(84) Benannte Vertragsstaaten:
**DE ES FR GB IT**

(30) Priorität: **14.07.1999 DE 19932945**

(43) Veröffentlichungstag der Anmeldung:
**17.04.2002 Patentblatt 2002/16**

(73) Patentinhaber: **SIEMENS AKTIENGESELLSCHAFT**
**80333 München (DE)**

(72) Erfinder: **KODES, Rudolf**
**D-90522 Oberasbach (DE)**

(56) Entgegenhaltungen:
**EP-A- 0 411 873      EP-A- 0 659 996**
**EP-A- 0 877 329      WO-A-97/12300**
**WO-A-98/24010      DE-A- 4 319 926**
**FR-A- 2 724 744**

EP 1 196 828 B1

**Beschreibung**

Die Erfindung betrifft ein Verfahren und eine Anordnung zur Optimierung eines Prozeßmodells.

Im Rahmen einer Vorverarbeitung wird zweckmäßig in einem Schritt des Systems-Engineering ein Prozeßmodell für ein technisches System ermittelt. Solch ein Prozeßmodell wird mit wachsender Komplexität des technischen Systems schnell unübersichtlich. Damit verbunden sind Fehlerquellen bei Veränderung, Anpassung und Umsetzung des Prozeßmodells. Auch kann ein Prozeßmodell für ein bereits existierendes technisches System mit dem Ziel der Verbesserung ermittelt werden. Gerade wenn das reale technische System als Vorlage für das Prozeßmodell dient, wird das Modell selbst schnell unübersichtlich; ein Optimierung ist nur schwer, mit enormem Aufwand und hoher Fehleranfälligkeit möglich.

Aus WO 98/24010 ist ein Verfahren zur neuronalen Modellierung der Abhängigkeiten von Einflußgrößen eines technischen Systems bekannt, wodurch beispielsweise auf bestimmte Meßfühler verzichtet werden kann.

Aus DE 43 19 926 A1 ist ein Verfahren zu Regelung eines kontinuierlichen Prozesses mit einer Optimierphase eines Modells, das für das Verhalten des Prozesses repräsentativ ist, bekannt.

Aus EP 0 877 329 A1 ist ein Verfahren zur Erzeugung und Verwendung von mehreren Logikmodellen, die gegenseitige Abhängigkeiten aufweisen, bekannt, bei dem Widersprüche zwischen den Logikmodellen vermieden werden.

Die Aufgabe der Erfindung besteht darin, ein Verfahren und eine Anordnung zur Optimierung eines Prozeßmodells anzugeben, bei dem/der die Optimierung möglichst systematisch und fehlertolerant durchgeführt werden kann.

Die Aufgabe wird hinsichtlich des Verfahren durch die Merkmale des Patentanspruchs 1 und hinsichtlich der Anordnung durch die Merkmale des Patentanspruchs 3 erfindungsgemäß gelöst. Eine Weiterbildung des erfindungsgemäßen Verfahrens ergibt sich aus dem abhängigen Patentanspruch 2.

Die Erfindung betrifft im wesentlichen ein Verfahren und eine Anordnung zur Optimierung eines Prozeßmodells,

bei dem/der Wirkungen von Komponenten eines Prozeßmodells auf weitere Komponenten bestimmt werden, wobei die Komponenten Ergebnisse und Tätigkeiten sind, und

bei dem/der anhand der Wirkung die Optimierung durchgeführt wird, wobei die Optimierung mindestens durch Parallelisierung von Komponenten und/oder Eliminierung einer Komponente und/oder Einführung einer geprüften Zwischenkomponente erfolgt.

Ausführungsbeispiele der Erfindung werden nachfolgend anhand der Zeichnungen darstellt und erläutert.

Es zeigen

Fig.1    einen Graphen, der Wirkungen (Einflüsse) von Ergebnissen und Tätigkeiten darstellt;

Fig.2    ein Koordinatensystem zur Klassifizierung von Ergebnissen;

Fig.3    eine Skizze mit alternativen Formen für das Koordinatensystem von Fig.2;

Fig.4    ein Koordinatensystem, das die Bedeutungen der einzelnen Bereiche zur Klassifizierung von Ergebnissen veranschaulicht;

Fig.5    eine Aufsplittung in parallele Ergebnisse (bei speisenden Ergebnissen);

Fig.6    eine Aufsplittung in ein geprüftes Ergebnis (bei speisenden Ergebnissen);

Fig.7    eine Aufsplittung in parallele Ergebnisse (bei sammelnden Ergebnissen);

Fig.8    eine Aufsplittung in ein geprüftes Ergebnis (bei sammelnden Ergebnissen);

Fig.9    eine Skizze mit einer Parallelisierung bei puffernden Ergebnissen;

Fig.10    eine Skizze mit einer Eliminierung eines Ergebnisses bei puffernden Ergebnissen;

Fig.11    eine Aufsplittung in parallele Ergebnisse (bei kritischen Ergebnissen);

Fig.12    eine Aufsplittung in ein geprüftes Ergebnis (bei kritischen Ergebnissen);

Fig.13    eine Tabelle mit Beispielen für eine Beeinflussung $B_E$ eines Ergebnisses durch vorangegangene Ergebnisse und Tätigkeiten;

Fig.14    eine Prozessoreinheit.

## EINFLÜSSE VON ERGEBNISSEN UND TÄTIGKEITEN

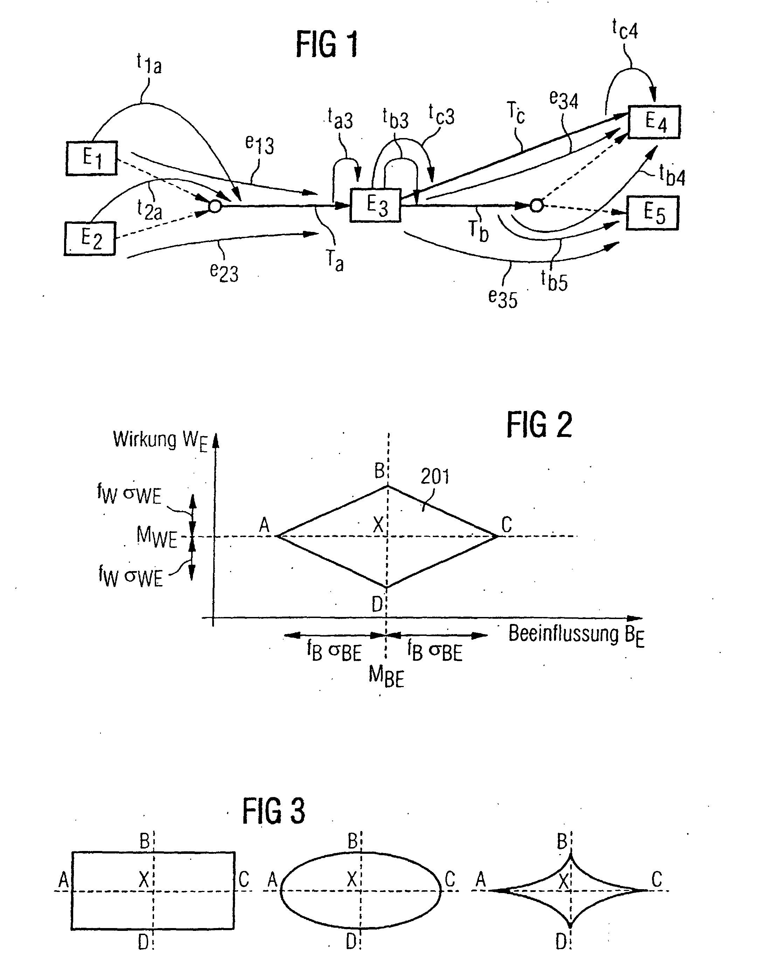

Ein Ergebnis E in einem (Engineering-)Prozeß, und damit in einem Prozeßmodell, wird in einem bestimmten Maß von allen unmittelbar vorausgehenden Ergebnissen beeinflußt. Andererseits wirkt ein Ergebnis auf alle unmittelbar nachfolgenden Ergebnisse. In **Fig.1** sind diese Einflüsse in einem Ausschnitt eines Prozeßmodells dargestellt, wobei jedes Ergebnis mit $e_{ik}$ gekennzeichnet ist. Dabei werden für die.Darstellung die folgenden Modellelemente eingesetzt:

a) Kasten = Ergebnis,
b) Pfeil = Tätigkeit,
c) gestrichelter Pfeil = Informationsfluß.

Ein Einfluß von einem Ergebnis auf ein nachfolgendes Ergebnis besteht, wenn zwischen diesen Ergebnissen mindestens eine Verbindung über Tätigkeiten oder Informationsflüsse vorhanden ist.
Der Einfluß des i-ten auf das k-te Ergebnis wird bestimmt als $e_{ik}$ mit

$$(1) \qquad 0 \le e_{ik} \le 1 \qquad i,k \in N.$$

Dabei bedeutet der Wert 1 "größtmöglicher Einfluß", der Wert 0 bedeutet "kein Einfluß".
Weiterhin wird jede Tätigkeit T in einem (Engineering-)Prozeß (Prozeßmodell) in bestimmtem Maß von allen unmittelbar vorausgehenden Ergebnissen beeinflußt. Andererseits wirkt eine Tätigkeit auf alle unmittelbar nachfolgende Ergebnisse. In Fig.1 sind diese Einflüsse dargestellt und jeweils mit einem indizierten "t" gekennzeichnet.
Ein Einfluß besteht zwischen einem Ergebnis und den daraus direkt oder über Informationsflüsse entspringenden Tätigkeiten sowie zwischen einer Tätigkeit und den daraus direkt oder über Informationsflüsse resultierenden Ergebnissen.
Der Einfluß des i-ten Ergebnisses auf die n-te Tätigkeit wird definiert als $t_{in}$ mit

$$(2) \qquad 0 \le t_{in} \le 1 \qquad i \in N; n \in [a,b,c,...].$$

Analog wird der Einfluß der m-ten Tätigkeit auf das k-te Ergebnis definiert als $t_{mk}$ mit

$$(3) \qquad 0 \le t_{mk} \le 1 \qquad m \in [a,b,c,...]; k \in N.$$

Dabei bedeutet der Wert 1 "größtmöglicher Einfluß", der Wert 0 bedeutet "kein Einfluß".
Beispielsweise bezeichnen in Fig.1:

-    $t_{2a}$: Einfluß des Ergebnisses $E_2$ auf die Tätigkeit $T_a$;
-    $e_{23}$: Einfluß des Ergebnisses $E_2$ auf das Ergebnis $E_3$;
-    $t_{a3}$: Einfluß der Tätigkeit $T_a$ auf das Ergebnis $E_3$.

## Beeinflussung eines Ergebnisses

Mit $B_E$ wird die Beeinflussung eines Ergebnisses durch vorausgehende Ergebnisse und/oder Tätigkeiten bezeichnet. Die Beeinflussung des k-ten Ergebnisses wird definiert als Summe der Einflüsse $e_{ik}$ aller unmittelbar vorausgehenden Ergebnisse zuzüglich der Summe der Einflüsse aller unmittelbar vorausgehenden Tätigkeiten.

$$(4) \qquad B_{Ek} = \Sigma_i \, e_{ik} + \Sigma_m \, t_{mk} \qquad i,k \in N; m \in [a,b,c,...]$$

## Einwirkung eines Ergebnisses

Mit $W_E$ wird die Einwirkung eines Ergebnisses auf nachfolgende Ergebnisse und Tätigkeiten bezeichnet. Die Einwirkung des i-ten Ergebnisses wird definiert als Summe der Einflüsse eik auf alle unmittelbar nachfolgenden Ergebnisse plus der Summe der Einflüsse auf alle unmittelbar nachfolgenden Tätigkeiten.

$$(5) \qquad W_{Ei} = \Sigma_k \, e_{ik} + \Sigma_n \, t_{in} \qquad i,k \in N; \, n \in [a,b,c,...].$$

## Beeinflussung einer Tätigkeit

Analog wird mit $B_T$ die Beeinflussung einer Tätigkeit durch vorausgehende Ergebnisse bezeichnet. Die Beeinflussung der n-ten Tätigkeit wird definiert als Summe der Einflüsse $t_{in}$ aller unmittelbar vorausgehenden Ergebnisse.

$$(6) \; B_{Tn} = \Sigma_i \, t_{in} \qquad i \in N; \, n \in [a,b,c,...].$$

## Einwirkung einer Tätigkeit

Analog wird mit $W_T$ die Einwirkung einer Tätigkeit auf nachfolgende Ergebnisse bezeichnet. Die Einwirkung der m-ten Tätigkeit wird definiert als Summe der Einflüsse $t_{mk}$ auf alle unmittelbar nachfolgenden Ergebnisse

$$(7) \; W_{Tm} = \Sigma_k \, t_{mk} \qquad k \in N; \, m \in [a,b,c,...].$$

## STRUKTURANALYSE

### Einflüsse von Ergebnissen und Tätigkeiten bei der Strukturanalyse

Für eine rein strukturelle Analyse des Aufbaus von Prozeßmodellen wird insbesondere das Maß der Einflüsse von Ergebnissen und Tätigkeiten nicht berücksichtigt; von Bedeutung ist lediglich, ob ein Einfluß besteht oder nicht. In den Gleichungen (1) bis (7) nehmen die Werte $e_{ik}$, $t_{in}$ und $t_{mk}$ folglich den Wert 1 an, falls ein Einfluß besteht.
Alternativ kann mit verschiedenen Einflüssen gerechnet werden; dann liegen die Werte bevorzugt in einem Bereich zwischen 0 und 1 (siehe obige Definitionen).
In Fig.1 ergibt sich demnach für das Ergebnis $E_3$:

- Beeinflussung:

$$B_{E3} = 2 + 1 = 3$$

  (zwei vorausgehenden Ergebnisse und eine vorausgehenden Tätigkeit)
- Einwirkung:

$$W_{E3} = 2 + 2 = 4$$

  (zwei nachfolgende Ergebnisse und zwei nachfolgende Tätigkeiten)

und für die Tätigkeit $T_a$ folgt:

- Beeinflussung: $B_{Ta} = 2$
  (zwei vorausgehenden Ergebnisse)
- Einwirkung: $W_{Ta} = 1$
  (ein nachfolgendes Ergebnis)

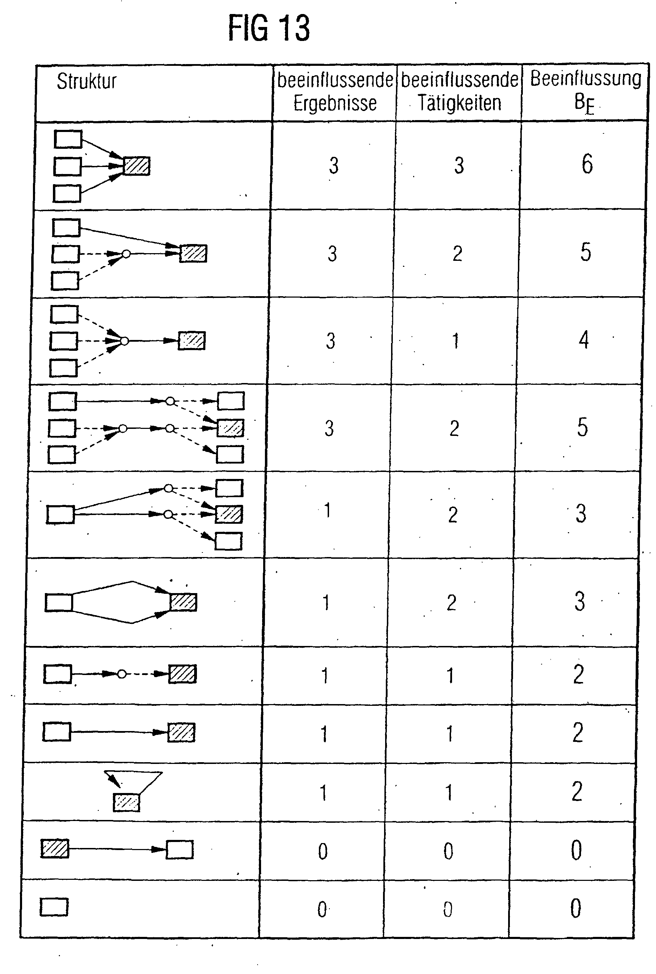

Weitere Beispiele sind in Fig.13 angegeben.

**Koordinatensystem zur Klassifizierung der Modellelemente**

Im folgenden werden die Ergebnisse eines Prozeßmodells betrachtet. Die Überlegungen können analog für Tätigkeiten angeführt werden.

Für jedes Ergebnis eines Prozeßmodells werden die Beeinflussung $B_E$ und die Einwirkung $W_E$ nach den Gleichungen (4) und (5) ermittelt. Zusätzlich wird für jede dieser Größen der arithmetische Mittelwert über alle Ergebnisse und die Standardabweichung $\sigma$ vom Mittelwert gebildet.

Der arithmetische Mittelwert $M_{BE}$ der Beeinflussungen ergibt sich gemäß:

$$(8a) \quad M_{BE} = \frac{1}{a} \cdot \sum_{k=1}^{a} B_{Ek},$$

wobei a die Anzahl der Ergebnisse bezeichnet. Die Ständardabweichung $\sigma_{BE}$ vom Mittelwert der Beeinflussungen ergibt sich gemäß:

$$(8b) \quad \sigma_{BE} = \sqrt{\frac{1}{a-1} \sum_{k=1}^{a} \left(B_{Ek} - M_{BE}\right)^2}$$

Der arithmetische Mittelwert der Einwirkungen ergibt sich zu:

$$(9a) \quad M_{WE} = \frac{1}{a} \cdot \sum_{i=1}^{a} W_{Ei}$$

Die Standardabweichung $\sigma_{BE}$ vom Mittelwert der Beeinflussungen ergibt sich gemäß:

$$(9b) \quad \sigma_{WE} = \sqrt{\frac{1}{a-1} \sum_{i=1}^{a} \left(W_{Ei} - M_{WE}\right)^2}$$

Mit Hilfe der Kenngrößen "Beeinflussung" und "Einwirkung" sowie der jeweiligen Mittelwerte und Standardabweichungen kann nun eine Klassifizierung der Ergebnisse vorgenommen werden. Dazu wird ein Koordinatensystem bestimmt, auf dessen Abszisse die Beeinflussung und auf dessen Ordinate die Einwirkung aufgetragen sind (vergleiche **Fig.2**).

In dieses Koordinatensystem werden die Geraden

$$(10) \quad B_E = M_{BE}$$

und

$$(11) \quad W_E = M_{WE}$$

eingezeichnet. Dadurch entstehen im 1.Quadranten des Koordinatensystems zunächst vier Bereiche.

Ein fünfter Bereich wird um dem Schnittpunkt

$$(12) \qquad X\,(\,M_{BE}\,;\,M_{WE}\,)$$

der beiden Geraden gemäß Gleichung (10) und Gleichung (11) definiert. Dazu werden zunächst folgende Punkte im Koordinatensystem ermittelt:

$$(13) \qquad A\,(\,M_{BE} - f_B\,\sigma_{BE}\,;\,M_{WE}\,),$$

$$(14) \qquad B\,(\,M_{BE}\,;\,M_{WE} + f_W\,\sigma_{WE}\,),$$

$$(15) \qquad C\,(\,M_{BE} + f_B\,\sigma_{BE}\,;\,M_{WE}\,),$$

$$(16) \qquad D\,(\,M_{BE}\,;\,M_{WE} - f_W\,\sigma_{WE}\,).$$

Mit dem Faktor $f_B$ wird dabei der Abstand der Punkte A und C vom Schnittpunkt X, mit $f_W$ der Abstand der Punkte B und D vom Schnittpunkt X festgelegt. Mit

$$(17) \qquad 0 \le f_B \le 3$$

$$(18) \qquad 0 \le f_W \le 3$$

erhält man Abstände im Bereich zwischen 0 und $3\sigma$.

Durch Verbinden der Punkte A mit B, B mit C, C mit D und schließlich D mit A ergibt sich eine Raute 201, deren Fläche den fünften Bereich definiert. in Fig.2 sind das Koordinatensystem und die fünf Bereiche dargestellt

Für diesen fünften Bereich 201 sind auch andere geometrische Formen (Rechteck, Ellipse etc.) denkbar. In **Fig.3** sind einige davon dargestellt. Diese Formen können wahlweise zur Verfügung gestellt werden.

**Bedeutung der Bereiche im Koordinatensystem**

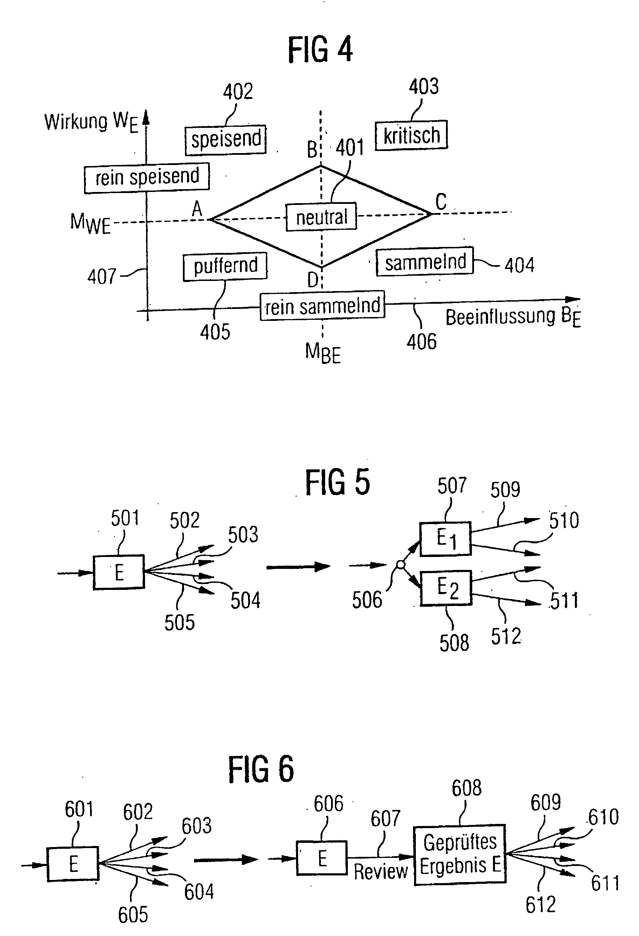

Jedes Modellelement wird entsprechend seiner Werte für Beeinflussung und Einwirkung in das Koordinatensystem eingeordnet und fällt dabei in einen der o.g. fünf Bereiche bzw. auf die Abszisse oder die Ordinate des Koordinatensystems. In **Fig.4** ist dies veranschaulicht:

- Im einem zentralen Bereich 401 befinden sich "unauffällige" oder neutrale Ergebnisse. Abhängig vom aktuell untersuchten Prozeßmodell, sollten die Faktoren $f_B$ und $f_W$, sowie die geometrische Form des zentralen Bereichs 401 so gewählt werden, daß dieser Bereich den größten Teil der Ergebnisse enthält. Als Voreinstellung wird für die Form des zentralen Bereichs 401 z.B. die Raute sowie für die Faktoren z.B. $f_B = 1$ und $f_W = 1$ gewählt.

In den vier Bereichen 402, 403, 404 und 405 außerhalb des zentralen Bereichs 401 befinden sich die "auffälligen Ergebnisse".

- Im linken oberen Bereich 402 befinden sich stark wirkende Ergebnisse, die selbst wenig beeinflußt werden. Dies sind demnach Ergebnisse, die vorwiegend speisenden Charakter haben.
- Im rechten unteren Bereich 404 befinden sich stark beeinflußte Ergebnisse, die selbst nur in geringem Maße Einwirkung entfalten (Ergebnisse mit sammelndem Charakter).
- Im linken unteren Bereich 405 befinden sich Ergebnisse, die wenig beeinflußt werden und wenig wirken. Dies sind Ergebnisse mit puffernden Charakter.
- Im rechten oberen Bereich 403 befinden sich stark wirkende Ergebnisse, die selbst stark beeinflußt werden. Dies sind Ergebnisse mit kritischem Charakter.
- Auf der Ordinate 407 des Koordinatensystems befinden sich Ergebnisse, die ausschließlich wirken, also selbst nicht beeinflußt werden. Dies sind rein speisende Ergebnisse (z.B. Startpunkte).
- Auf der Abszisse 406 des Koordinatensystems befinden sich Ergebnisse, die ausschließlich beeinflußt werden und selbst nicht wirken. Dies sind rein sammelnde Ergebnisse (z.B. Endergebnisse).

## OPTIMIERUNG, STRUKTURANALYSE

Aus der Strukturanalyse können die nachfolgend dargestellten Hinweise für die Optimierung des Prozeßmodells abgeleitet werden.

### neutrale Ergebnisse

Diese Ergebnisse sind hinsichtlich der Strukturanalyse unauffällig und müssen in diesem Zusammenhang nicht weiter betrachtet werden.

### speisende Ergebnisse

Diese Ergebnisse wirken stark auf eine größere Zahl unmittelbar nachfolgender Ergebnisse und Tätigkeiten. Fehler oder Unzulänglichkeiten in solchen Ergebnissen können sich demzufolge vielfach verbreiten.
Solche Ergebnisse sollten hinsichtlich ihrer Einwirkung überschaubar gehalten und entsprechend überprüft werden.
Für eine Optimierung werden daher insbesondere folgende Möglichkeiten in Betracht gezogen:

⇒ Aufsplitten in parallel liegende Teilergebnisse, die jeweils weniger Einwirkungen besitzen. **Fig.5** zeigt ein Ergebnis 501 mit den vier Einwirkungen 502 bis 505. Durch Aufsplitten 506 des Ergebnisses 501 ergeben sich ein Teilergebnis 507 mit den Einwirkungen 509, 510 und ein Teilergebnis 508 mit den Einwirkungen 511, 512.

⇒ Einfügen einer Überprüfung, anhand derer sichergestellt wird, daß ein Ergebnis, das eine (vielfache). Einwirkung ausübt, überprüft wird. In **Fig.6** ist ein Ergebnis 601 mit Einwirkungen 602 bis 605 dargestellt. Durch die Überprüfung (engl.: Review) 607 des Ergebnisses 606 ergibt sich ein geprüftes Ergebnis 608 mit den Einwirkungen 609 bis 612.

### sammelnde Ergebnisse

Diese Ergebnisse werden von einer größeren Zahl unmittelbar vorhergehender Ergebnisse und Tätigkeiten beeinflußt. Aufgrund der vielfältigen Einwirkungen, z.B. durch Daten aus unterschiedlichen Ergebnissen und durch Tätigkeiten vieler unterschiedlicher Bearbeiter, können solche Ergebnis zu Schwierigkeiten führen. Insbesondere kann eine termingerechte Fertigstellung eines Produkts bzw. eines technischen Systems gefährdet sein, eine Überschaubarkeit der Zusammenhänge wegen des stark ausgeprägten sammelnden Charakters verloren gehen oder Inkonsistenzen in den Daten auftreten.
Solche Ergebnisse werden insbesondere hinsichtlich eines Fertigstellungstermins sorgfältig überprüft, hinsichtlich des Inhalts überschaubar gehalten und nach der Fertigstellung auf Konsistenz geprüft werden.
Für eine Optimierung werden daher folgende Möglichkeiten in Betracht gezogen:

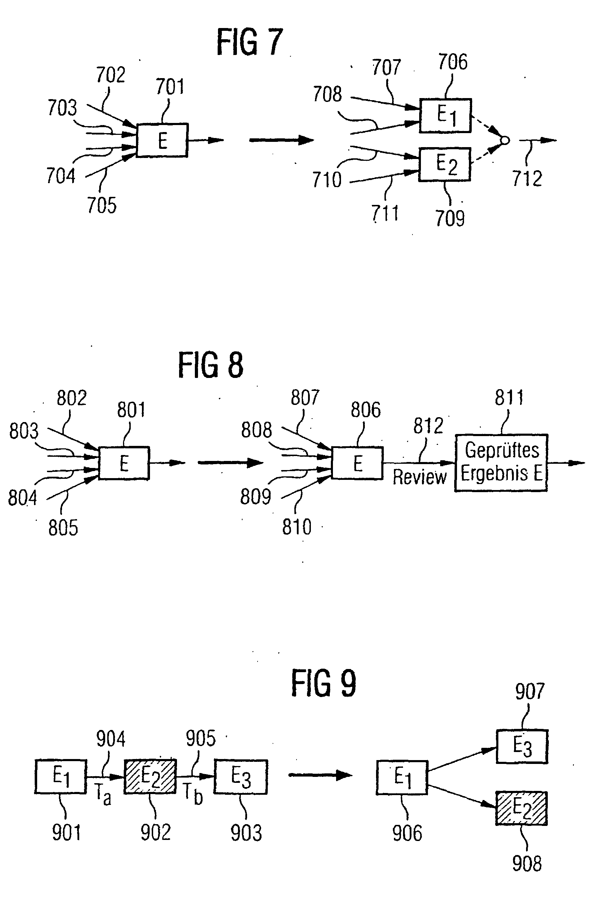

⇒ Es erfolgt eine Aufsplittung in parallel liegende Teilergebnisse. Dabei weisen die Teilergebnisse weniger Beeinflussungen auf, was dazu führt, daß deren jeweiliger Inhalt überschaubar und einfacher konsistent zu halten ist. In **Fig.7** ist ein Ergebnis 701 mit Beeinflussungen 702 bis 705 dargestellt. Die Aufsplittung erfolgt derart, daß zwei Beeinflussungen 707 und 708 auf ein Ergebnis 706 und zwei Beeinflussungen 710 und 711 auf ein Ergebnis 709 wirken. Die Ergebnisse 706 und 709 werden daraufhin zusammengefaßt (siehe Einwirkung 712).

⇒ Einfügen einer Überprüfung, um das Ergebnis hinsichtlich der Konsistenz der vielfältigen aufgesammelten Inhalte zu prüfen. In **Fig.8** wirken zunächst auf ein Ergebnis 801 die Beeinflussungen 802 bis 805 ein. Die Umgestaltung erfolgt nun derart, daß ein Ergebnis 806, auf das Beeinflussungen 807 bis 810 einwirken überprüft wird (vgl. Review 812) und somit in einem geprüften Ergebnis 811 zusammengeführt wird.

### puffernde Ergebnisse

Diese Ergebnisse werden wenig beeinflußt und wirken gering. Die Erstellung solcher Ergebnisse kann zeitverzögernd wirken bzw. ganz überflüssig sein. Typisch sind Ergebnisse, die in einem sequentiellen Pfad liegen, dessen Tätigkeiten parallelisiert werden können oder es werden z.B. lediglich Formatumsetzungen der enthaltenen Daten (z.B. wegen eines Medienbruchs) vorgenommen.

Für eine Optimierung werden die folgenden Möglichkeiten in Betracht gezogen:

⇒ Ist eine Parallelisierung möglich?
**Fig.9** zeigt drei in Reihe geschaltete Ergebnisse 901, 902 und 903, wobei eine Tätigkeit $T_a$ 904 das Ergebnis 901 in das Ergebnis 902 und eine Tätigkeit $T_b$ 905 das Ergebnis 902 in das Ergebnis 903 überführt. Die Parallelisierung erfolgt nun derart, daß festgestellt wird, ob das Ergebnis 903 von dem Ergebnis 902 unabhängig ist. Ist dies der Fall, so kann direkt parallel von dem Ergebnis 901 zu dem Ergebnis 902 und dem Ergebnis 903 übergeführt werden. Dieser Sachverhalt ist gezeigt in Fig.9 in der Anordnung der Ergebnisse 906, 907 und 908 untereinander.

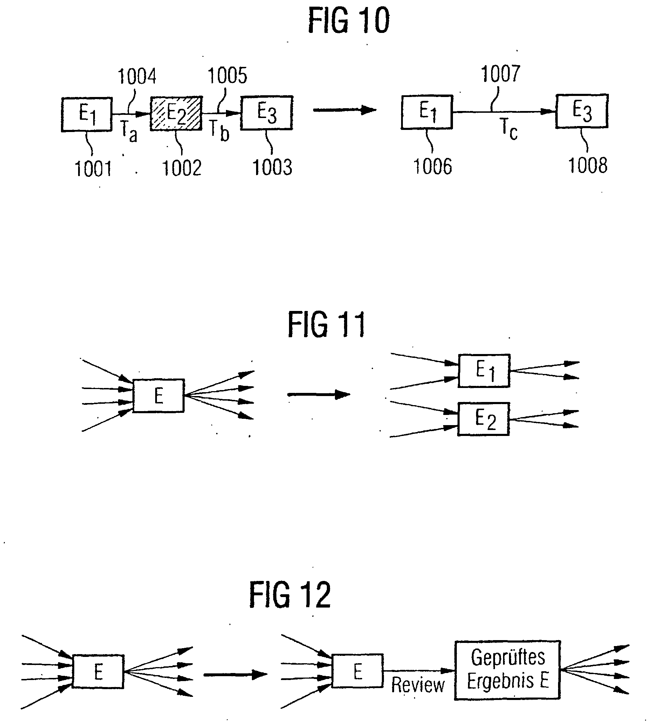

⇒ Kann das Ergebnis entfallen?
In **Fig.10** sind die Ergebnisse 1001, 1002 und 1003 in einer Sequenz dargestellt, wobei eine Tätigkeit $T_a$ 1004 das Ergebnis 1001 in das Ergebnis 1002 und eine Tätigkeit $T_b$ das Ergebnis 1002 in das Ergebnis 1003 überführt. Ist das Ergebnis 1002 nicht unbedingt notwendig, kann es entfallen. Es ergibt sich ein Übergang von einem Ergebnis 1006 zu einem Ergebnis 1008 anhand einer Tätigkeit $T_c$ 1007.

**kritische Ergebnisse**

Diese Ergebnisse werden von einer größeren Zahl unmittelbar vorhergehender Ergebnisse und Tätigkeiten beeinflußt. Andererseits wirken sie stark auf eine größere Zahl unmittelbar nachfolgender Ergebnisse und Tätigkeiten. Aufgrund der vielfältigen Einwirkungen z.B. durch Daten aus unterschiedlichen Ergebnissen und durch Tätigkeiten vieler unterschiedlicher Bearbeiter können solche Ergebnisse problematisch sein. Insbesondere können die termingerechte Fertigstellung eines Systems gefährdet sein, die Überschaubarkeit wegen des stark sammelnden Charakters verloren gehen und Inkonsistenzen der enthaltenen Daten auftreten. Diese Probleme sind besonders kritisch, da sich aufgrund der breiten Einwirkung Fehler oder Unzulänglichkeiten in solchen Ergebnissen vielfach verbreiten können.
Die Ergebnisse werden hinsichtlich z.B. des Fertigstellungstermins sorgfältig überprüft, hinsichtlich Beeinflussung, Inhalt und Einwirkung überschaubar gehalten und nach der Fertigstellung eingehend geprüft.
Für eine Optimierung werden daher folgende Möglichkeiten in Betracht gezogen:

⇒ Aufsplitten in parallel liegende Teilergebnisse, mit jeweils weniger Beeinflussungen und Einwirkungen (vgl. **Fig. 11**).

⇒ Aufsplitten in aufeinanderfolgende Ergebnisse mit einer dazwischen liegenden Review-Tätigkeit, durch die das Ergebnis geprüft wird (vgl. **Fig.12**).

**UMSETZUNG, REALISIERUNG**

**Analyse**

Im Rahmen einer Analyse eines Prozeßmodells und damit eines mit dem Prozeßmodell assoziierten technischen Systems wird vorzugsweise eine Abbildung gemäß Fig.4 eingesetzt. Anhand der Gleichungen (17) und (18) wird die Form des neutralen Bereichs bestimmt. Dazu können diese Gleichungen als Teile einer Modellierung oder einer Bildschirmoberfläche, z.B. als Schaltflächen, ausgestaltet sein.
Als Voreinstellung wird für den neutralen Bereich die Rautenform und für die Faktoren der Gleichungen (17) und (18) der Wert "1" vorgesehen. Veränderungen an diesen Voreinstellungen werden vorzugsweise in dem Koordinatensystem von Fig.4 dargestellt.
Nach Auswahl einer Schaltfläche "Analysieren" wird ein Analyse-Algorithmus gestartet. Dieser Algorithmus ermittelt für jedes Ergebnis die Werte für Beeinflussung und Einwirkung automatisch aus der graphischen Struktur, d. h. aus den Verknüpfungen der einzelnen Modellelemente in dem Prozeßmodell. Die ermittelten Werte werden den einzelnen Ergebnissen im Prozeßmodell zugeordnet. Dies erfolgt zweckmäßig mittels dafür vorgesehener Systemattribute. Zusätzlich werden die Mittelwerte für die Beeinflussung und Einwirkung aller Ergebnisse und die jeweiligen Standardabweichungen berechnet.

**Darstellen der Analyseergebnisse**

Das Ergebnis der Analyse wird insbesondere in dem Koordinatensystem dargestellt:

1. Lage und gewählte Größe der Analysebereiche "neutral", "speisend", "sammelnd", "puffernd", "kritisch";
2. Lage der Mittelwerte für Einfluß (Beeinflussung und Einwirkung);

3. Anzahl der Ergebnisse in jedem der fünf Analysebereiche ("neutral", "speisend", "sammelnd", "puffernd", "kritisch") sowie auf der Ordinate ("rein speisende" Ergebnisse) bzw. auf der Abszisse ("rein sammelnde" Ergebnisse);

4. Häufigkeitsverteilung: Wieviel Ergebnisse liegen an einer bestimmten Stelle im Koordinatensystem? Hierzu wird das Koordinatensystem schachbrettartig unterteilt. Jeder Koordinate mit ganzen Zahlen wird ein Feld dieses Schachbretts zugeordnet. Durch Zahlen in den Feldern des Schachbretts wird angegeben, wieviel Ergebnisse jeweils bei einer bestimmten Koordinate liegen.

5. Auflisten aller Ergebnisse (z.B. ihrer Bezeichnung nach), die in einem bestimmtem Analysebereich bzw. auf einem bestimmten Feld des "Schachbretts" liegen; Einstellen eines gewünschten Ergebnisses.

Nachdem das Analyse-Ergebnis dargestellt wurde, können die Faktoren (siehe Gleichungen (17) und (18)) und die Form des neutralen Bereichs verändert werden. Die Veränderungen werden im Koordinatensystem dargestellt. Insbesondere werden dabei die Punkte 1, 3 und 5 der Ergebnisdarstellung laufend aktualisiert.

## Bestimmung/Kennzeichnung auffälliger Modellelemente

Nachdem die Analyse durchgeführt wurde, kann eine Schaltfläche mit der Bezeichnung "Modellelemente einfärben" ausgewählt werden. Dadurch öffnet sich bevorzugt ein Dialogfenster, das für jeden der fünf Analysebereiche ("neutral", "speisend", "sammelnd", "puffernd", "kritisch") sowie für die auf der Ordinate ("rein speisend") bzw. auf der Abszisse ("rein sammelnd") liegenden Ergebnisse anbietet, auf welche Art sie hervorgehoben werden sollen. Vorzugsweise gibt es dafür zu jedem Bereich eine Farbpalette, wobei für jeden Bereich bereits eine andere Farbe voreingestellt ist. Also z.B. schwarz für Ergebnisse im "neutralen" Bereich, rot für "kritische" Ergebnisse etc. .Durch anklicken der Schaltfläche "Einfärben" können im Prozeßmodell die Ergebnisse farblich markiert werden.

**Fig.13** zeigt eine Tabelle mit Beispielen für eine Beeinflussung $B_E$ eines Ergebnisses durch vorangegangene Ergebnisse und Tätigkeiten. Im Rahmen der obigen Ausführungen ist die Fig.13 aus sich heraus verständlich.

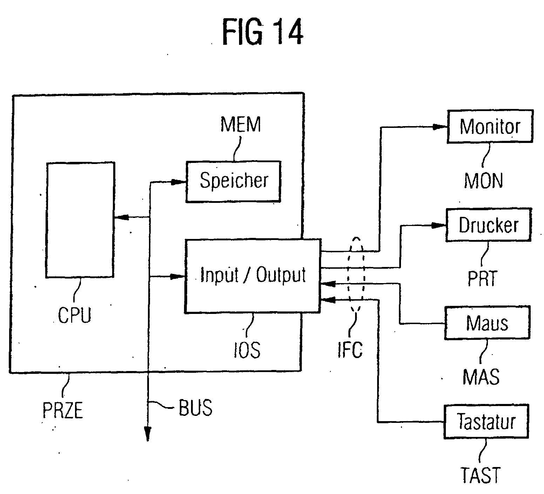

In **Fig.14** ist eine Prozessoreinheit PRZE dargestellt. Die Prozessoreinheit PRZE umfaßt einen Prozessor CPU, einen Speicher SPE und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

## Patentansprüche

1.  Verfahren zur Optimierung eines Prozeßmodells

    a)bei dem Wirkungen ($W_E$) von Komponenten eines Prozeßmodells auf weitere Komponenten bestimmt werden, wobei die Komponenten Ergebnisse ($E_1...E_5$) und Tätigkeiten ($T_a$, $T_b$, $T_c$) sind, und

    b)bei dem anhand der Wirkungen die Optimierung durchgeführt wird, wobei die Optimierung mindestens eine Überprüfbarkeit der Durchführung einer Parallelisierung von Komponenten durch Aufsplittung in parallel liegende Teilergebnisse mit weniger Beeinflussungen, einer Eliminierung einer Komponente und einer Einführung einer geprüften Zwischenkomponente durch Aufsplitten in aufeinanderfolgende Ergebnisse mit einer dazwischenliegenden Review-Tätigkeit, die durch das Ergebnis geprüft wird, umfasst.

2.  Verfahren nach Anspruch 1,
    bei dem mindestens eine der folgenden Wirkungen bestimmt wird:

    a)Einfluß ($e_{ik}$) mindestens eines Ergebnisses, das einer Tätigkeit vorausgeht;

    b)Einfluß ($t_{mk}$) einer Tätigkeit auf mindestens ein nachfolgendes Ergebnis;

    c)Einfluß mindestens einer Tätigkeit, die einem Ergebnis vorausgeht;

    d)Einfluß eines Ergebnisses auf mindestens eine nachfolgende Tätigkeit;

3.  Anordnung zur Optimierung eines Prozeßmodells,
    bei der eine Prozessoreinheit (PRZE) vorgesehen ist, die derart eingerichtet ist, daß

    a) Wirkungen ($W_E$) von Komponenten eines Prozeßmodells auf weitere Komponenten bestimmbar sind, wobei die Komponenten Ergebnisse ($E_1...E_5$) und Tätigkeiten ($T_a$, $T_b$, $T_c$) sind, und

b) anhand der Wirkungen die Optimierung derart durchführbar ist, daß mindestens eine Überprüfung der Durchführbarkeit einer Parallelisierung von Komponenten durch Aufsplittung in parallel liegende Teilergebnisse mit weniger Beeinflussungen, einer Eliminierung einer Komponente und einer Einführung einer geprüften Zwischenkomponente durch Aufsplitten in aufeinanderfolgende Ergebnisse mit einer dazwischenliegenden Review-Tätigkeit, die durch das Ergebnis geprüft wird, erfolgt.

**Claims**

1. Method for optimizing a process model

   a) in which effects ($W_E$) of components of a process model on other components are determined, the components being results ($E_1...E_5$) and activities ($T_a$, $T_b$, $T_c$), and
   b) in which the effects are used to perform optimization, the optimization comprising at least one checkability for the performance of parallelization of components through splitting into parallel-situated subsidiary results with relatively few instances of influencing, elimination of a component and introduction of a checked intermediate component through splitting into successive results with a review activity in between which is checked by the result.

2. Method according to Claim 1,
   in which at least one of the following effects is determined:

   a) influence ($e_{ik}$) of at least one result which precedes an activity;
   b) influence ($t_{mk}$) of an activity on at least one subsequent result;
   c) influence of at least one activity which precedes a result;
   d) influence of a result on at least one subsequent activity.

3. Arrangement for optimizing a process model,
   in which a processor unit (PRZE) is provided which is set up such that

   a) effects ($W_E$) of components of a process model on other components can be determined, the components being results ($E_1...E_5$) and activities ($T_a$, $T_b$, $T_c$), and
   b) the effects can be used to perform optimization such that at least one check on the implementability of parallelization of components through splitting into parallel-situated subsidiary results with relatively few instances of influencing, elimination of a component and introduction of a checked intermediate component through splitting into successive results with a review activity in between which is checked by the result takes place.

**Revendications**

1. Procédé d'optimisation d'un modèle de processus

   a) dans lequel des effets ($W_E$) de composants d'un modèle de processus sur d'autres composants sont déterminés, les composants étant des résultats ($E_1 ... E_5$) et des activités ($T_a$, $T_b$, $T_c$), et
   b) dans lequel l'optimisation est exécutée à l'aide des effets, l'optimisation comprenant au moins une capacité de contrôle de l'exécution d'une parallélisation de composants par répartition en résultats partiels situés en parallèle avec moins d'influences, une élimination d'un composant et une introduction d'un composant intermédiaire contrôlé par répartition en résultats successifs avec une activité de vérification située entre les deux, qui est contrôlée par le résultat.

2. Procédé selon la revendication 1, dans lequel au moins un des effets suivants est déterminé :

   a) influence ($e_{ik}$) d'au moins un résultat, qui part d'une activité ;
   b) influence ($t_{mk}$) d'une activité sur au moins un résultat suivant ;
   c) influence d'au moins une activité qui part d'un résultat ;
   d) influence d'un résultat sur au moins une activité consécutive.

3. Dispositif d'optimisation d'un modèle de processus, dans lequel une unité de processeur (PRZE) est prévue, qui est disposée de telle manière que

a) des effets ($W_E$) de composants d'un modèle de processus sur d'autres composants peuvent être déterminés, les composants étant des résultats ($E_1...E_5$) et des activités ($T_a$, $T_b$, $T_c$), et
b) à l'aide des effets l'optimisation peut être exécutée de telle manière que se produit au moins un contrôle de la capacité d'exécution d'une parallélisation de composants par répartition en résultats partiels situés en parallèle avec moins d'influences, une élimination d'un composant et une introduction d'un composant intermédiaire contrôlé par répartition en résultats successifs avec une activité de vérification située entre les deux qui est contrôlée par le résultat.

## FIG 1

## FIG 2

Wirkung $W_E$

$f_W \sigma_{WE}$

$M_{WE}$

$f_W \sigma_{WE}$

201

Beeinflussung $B_E$

$f_B \sigma_{BE}$

$f_B \sigma_{BE}$

$M_{BE}$

## FIG 3

## FIG 4

402 speisend
403 kritisch

Wirkung W$_E$

rein speisend

B 401

neutral

M$_{WE}$ ─── A ──────────── C

puffernd D sammelnd 404

407

rein sammelnd Beeinflussung B$_E$

405 406

M$_{BE}$

## FIG 5

501 E
502 503
505 504

→

507 E$_1$ 509 510

506

508 E$_2$ 512 511

## FIG 6

601 E
602 603
605 604

→

606 E 607 Review

608 Geprüftes Ergebnis E

609 610
612 611

# FIG 7

# FIG 8

# FIG 9

# FIG 10

# FIG 11

# FIG 12

# FIG 13

| Struktur | beeinflussende Ergebnisse | beeinflussende Tätigkeiten | Beeinflussung $B_E$ |
|---|---|---|---|
| | 3 | 3 | 6 |
| | 3 | 2 | 5 |
| | 3 | 1 | 4 |
| | 3 | 2 | 5 |
| | 1 | 2 | 3 |
| | 1 | 2 | 3 |
| | 1 | 1 | 2 |
| | 1 | 1 | 2 |
| | 1 | 1 | 2 |
| | 0 | 0 | 0 |
| | 0 | 0 | 0 |

# FIG 14